# EUROPEAN PATENT APPLICATION

(11) **EP 3 407 249 A2**
(43) Date of publication of application: **28.11.2018**
(21) Application number: 18169571.9
(22) Date of filing: 26.04.2018
(51) Int. Cl.: G06K 9/00

(54) **A METHOD AND SYSTEM FOR GENERATING AND USING A PERCEPTION SCENE GRAPH IN MOTOR VEHICLE APPLICATIONS**

(30) Priority: 26.05.2017 US 201715607061
(71) Applicant: Dura Operating, LLC, Auburn Hills, MI 48326 (US)
(72) Inventor: HOVIS, Jeffrey Gene, Almont, MI 48003 (US); SZCZERBA, Michael Bernhard, Troy, MI 48084 (US)
(74) Representative: Bungartz Christophersen Partnerschaft mbB Patentanwälte

(57) **Abstract**

A method and system is provided for generating a perception scene graph (PSG) for use in a motor vehicle. External sensor information and vehicle-to-everything (V2X) information are collected on a volume of space surrounding the vehicle. The sensor information and V2X information are fused to increase the fidelity of the information. The fused information is analyzed to detect, classify, and locate objects present in the volume of space surrounding the vehicle. A perception controller generates and publishes the PSG, which includes a virtual 3-D model of the volume of space containing the classified and located objects. At least one vehicle controller subscribes to the PSG and extracts information from the PSG for use as an input for a software application to generate instructions for use in execution of a vehicle application routine. The vehicle controller may also publish a real time copy of the PSG.

## Description

The invention relates generally to a perception system for a motor vehicle, and more particularly to a method and system for generating a perception scene graph for use in motor vehicle applications.

The statements in this section merely provide background information related to the present disclosure and may or may not constitute prior art.

Advanced Driver Assistance Systems (ADAS) are used in motor vehicles to enhance or automate selective motor vehicle systems in order to increase occupant safety and operator driving performance. ADAS include vehicle controllers that are in communication with external sensors, vehicle state sensors, and selective motor vehicle systems, such as occupant safety systems and vehicle control systems. The vehicle controllers analyze information gathered by the external sensors and vehicle state sensors to provide instructions to the vehicle control systems to assist the vehicle in avoiding and navigating around obstacles as the vehicle travels down a road.

Typical vehicle controllers include processors and non-transitive memories. The non-transitive memories contained predefined routines executable by the processors and databases accessible by the processors. The processors analyze the information supplied by the external sensors to detect and isolate objects from the background scene. The processors classify the objects by comparing the objects to reference objects stored in the databases. Once the objects are isolated and identified, the distance and direction of the objects relative to the motor vehicle are determined. The vehicle controllers then communicate instructions to the motor vehicle systems, including steering, throttle, and braking control systems, to negotiate a path to avoid contact with the objects or activate safety systems if contact with an object is imminent.

The external sensors may include lasers, radar, sonar, ultrasound, radar, and Light Detection and Ranging (LiDAR) sensors. Typically, vehicle controllers are configured to recognize and receive raw data from specific types of external sensors. If one or more of the sensors are upgraded or replaced with an alternative type of sensor, the vehicle controllers may need to be reconfigured to recognize the raw data from the upgraded or alternative type sensor. For example, if the vehicle controller was originally configured to receive and process information from an image capturing device, such as a camera to detect objects, and the camera was subsequently replaced with a LiDAR for detecting and determining the range of objects, the processor of the vehicle controller may be required to be upgraded to provide the capacity to analyze the new raw data stream. Also, the vehicle controller may require new software routines to process the raw data from a LiDAR as opposed to the original camera.

Thus, while current ADAS having vehicle controllers adequate to process information from predetermined specific types of exterior sensors to achieve their intended purpose, there is a need for a new and improved system and method for a perception system to accommodate new sensor types without the need of upgrading the processors and/or routines of the vehicle controllers.

According to several aspects, a method of generating a perception scene graph (PSG) for use in a motor vehicle is provided. The method includes the steps of collecting sensor information, by at least one external sensor having an effective sensor range, about an adjacent surrounding of the motor vehicle; processing the sensor information, by a perception controller, to generate the PSG comprising a virtual model of the adjacent surrounding of the motor vehicle; subscribing, by a state decision logic (SDL) controller, to the PSG; and extracting information from the PSG, by the SDL controller, for use in execution of a vehicle application routine.

In an additional aspect of the present disclosure, the method further includes the step of publishing a copy of the PSG to the SDL controller.

In another aspect of the present disclosure, the further includes the steps of collecting vehicle-to-everything (V2X) information, by a V2X receiver, about an extended surrounding of the motor vehicle beyond the effective sensor range of the at least one external sensor; and processing the V2X information, by the perception controller, to generate the PSG comprising a virtual model of the adjacent and the extended surroundings of the motor vehicle.

In another aspect of the present disclosure, the V2X information is provided from a plurality of vehicle-to-vehicle (V2V) communication equipped motor vehicles or from a plurality of vehicle-to-infrastructure (V2I) communication equipped road side units.

In another aspect of the present disclosure, the method further includes the step of fusing, by the perception controller, the sensor information and the V2X information.

In another aspect of the present disclosure, the method includes the steps of detecting at least one object within the adjacent surrounding of the motor vehicle, by a sensor pre-processor, in the sensor information; and comparing the detected at least one object, by the perception controller, with a plurality of reference objects to classify the detected at least one object.

In another aspect of the present disclosure, the method includes the step of determining the range and direction of the detected at least one object with respect to the motor vehicle.

In another aspect of the present disclosure, the method includes the steps of continuously updating the PSG by continuous collecting sensor information and receiving V2X information to generate the PSG comprising a real-time virtual 3-dimensional model of the adjacent and extended surroundings of the motor vehicle.

In another aspect of the present disclosure, the vehicle application routine includes rendering a display of the virtual 3-dimensional model of the adjacent and extended surroundings of the motor vehicle on a human machine interface (HMI).

In another aspect of the present disclosure, the method includes the steps of receiving vehicle state information, by SDL controller, on the state of the vehicle including at least one of a vehicle states comprising velocity, acceleration, and steering angle; executing a driver assist application routine, by the SDL controller, utilizing information extracted from the PSG and the vehicle state information to generate a vehicle control instruction; and sending the control instruction by the SDL controller, to a vehicle control system to navigate the motor vehicle through the adjacent and extended surrounds of the motor vehicle.

In another aspect of the present disclosure, the method includes the steps of transmitting, by a V2X transmitter, the PSG comprising the virtual 3-dimensional model of the adjacent and extended surroundings of the motor vehicle to an adjacent vehicle or roadside unit equipped with a V2X receiver.

According to several aspects, a method of generating a perception scene graph (PSG) is provided. The method includes the steps of collecting sensor information, by a plurality of external sensors, on a volume of space surrounding a motor vehicle; receiving vehicle-to-everything (V2X) information, by a V2X receiver, augmenting the sensor information on the volume of space surrounding the motor vehicle; fusing the sensor information and V2X information, by a perception controller, to increase the fidelity of the volume of space surrounding the motor vehicle; analyzing the fused information, by the perception controller, to detect, classify, and locate objects present in the volume of space surrounding the motor vehicle; and generating the PSG comprising a virtual 3-dimensional model of the volume of space surrounding the motor vehicle containing the classified and located objects.

In an additional aspect of the present disclosure, the method further includes the step of publishing, by the perception controller, the PSG containing the virtual model of the volume of space containing the classified and located objects.

In another aspect of the present disclosure, the method further includes the steps of subscribing, by at least one vehicle system controllers, to the PSG published in the perception controller; and publishing, by the at least one vehicle system controllers, a copy of the PSG.

According to several aspects, a system for generating and using a perception scene graph (PSG) in a motor vehicle is provided. The system includes at least one external sensor having an effective sensor range configured to gather information on a surrounding of the motor vehicle; at least one perception controller in communication with the at least one external sensor, wherein the at least one perception controller is configured to generate the PSG comprising a virtual model of the surroundings of the motor vehicle based on the gathered information from the external sensor; and at least one state decision logic (SDL) controller in communication with at least one vehicle control system, where the SDL controller is configured to extract information from the PSG to execute a vehicle application for the vehicle control system.

In an additional aspect of the present disclosure, the system further includes a pre-processor in communication with the at least one external sensor, wherein the pre-processor is configured to isolate and detect objects in the gathered sensor information.

In another aspect of the present disclosure, the system include a V2X receiver in communication with the perception controller, where the V2X receiver is configured to receive V2X information about an extended surrounding of the motor vehicle beyond the effective sensor range of the at least one external sensor.

In another aspect of the present disclosure, the perception controller includes a perception processor and a perception memory. The perception memory includes at least one routine assessable by the processor to generate the PSG based on information gathered by the external sensor and V2X communication.

In another aspect of the present disclosure, the system further includes at least one state decision logic (SDL) controller having a SDL processor and a SDL memory. The SDL memory includes an application routine to extract information from the PSG.

In another aspect of the present disclosure, the SDL controller is configured to publish a copy of the PSG.

A benefit provided by the method and system is that the external sensors may be replaced without the need to replace the SDL processors. Another benefit is that the type of sensors may be may be substituted without the need to replace the SDL processors and/or upgrade the software applications contained in the SDL memories to accommodate for the different types of sensors. Yet another benefit is that a real-time copy of the PSG may be published to the SDL controller to enable the vehicle to operate temporary in a "limp-home" mode if the external sensors or perception controller malfunctions.

Other benefits and further areas of applicability will become apparent from the description provided herein. It should be understood that the description and specific examples are intended for purposes of illustration only and are not intended to limit the scope of the present disclosure.

The drawings described herein are for illustration purposes only and are not intended to limit the scope of the present disclosure in any way.
- Fig. 1: is a functional diagram of a process for generating and using a perception scene graph (PSG) in a motor vehicle, according to an exemplary embodiment,
- Fig. 2: is a functional diagram of a perception system and a vehicle state decision logic (SDL) controller, according to an exemplary embodiment,
- Fig. 3: is a vehicle having the perception system and the vehicle SDL controller of FIG. 2, according to an exemplary embodiment,
- Fig. 4: is a rendering of the information contained in the PSG published by the perception system of FIG. 2, according to an exemplary embodiment,
- Fig. 5: is a flow diagram showing a method of generating and using a PSG in the vehicle of FIG. 3, according to an exemplary embodiment and
- Fig. 5A: shows examples of various software applications that may utilize the information stored in the PSG.

The following description is merely exemplary in nature and is not intended to limit the present disclosure, application, or uses.

A perception scene graph (PSG) is a data structure that contains processed information representing a virtual 3-Dimensonal (3-D) model of a volume of space and/or area surrounding the motor vehicle, including any objects within that volume of space and/or area. A PSG can be viewed as a visually-grounded graphical structure of the real-world surrounding the motor vehicle. In the PSG, objects are isolated from the background scene, characterized, and located with respect to the motor vehicle. The movements of the objects may be tracked and recorded. The movements of the objects may also be predicted based on historic locations and trends in the movements.

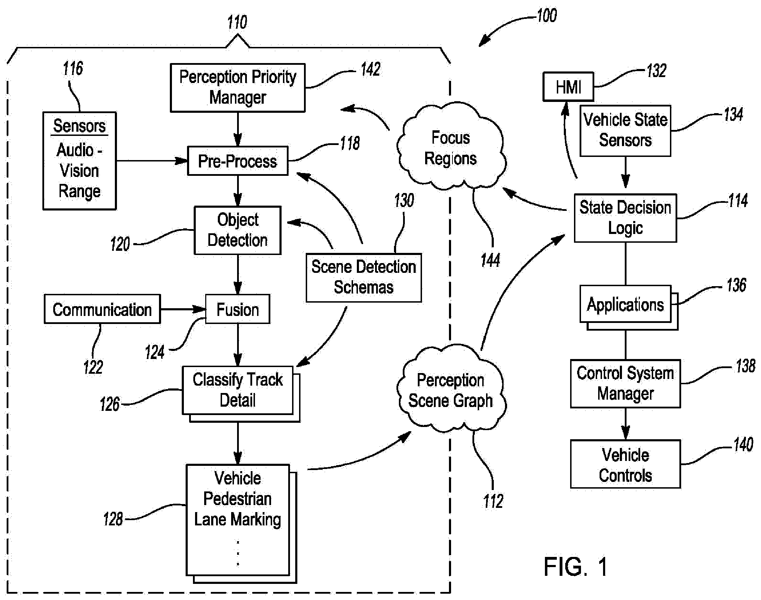

FIG. 1 shows a functional diagram 100 of a perception process 110 for generating a perception scene graph (PSG) 112 and the use of the PSG 112 by a motor vehicle having state decision logic (SDL) 114. The perception process 110 publishes the PSG 112 and the vehicle SDL 114 subscribes to and extracts the processed information from the PSG 112. The vehicle SDL 114 uses the extracted information as input for the execution of a variety of vehicle software applications.

The perception process 110 starts in block 116 where the external sensors of the motor vehicle gather information about a volume of space surrounding the motor vehicle, including the adjacent surrounding areas. The gathered raw information is pre-processed in block 118 and objects are isolated and detected in block 120 from the background scene. The distance and direction of the object relative to the motor vehicle are also determined. The information gathered about a volume of space, including the adjacent areas, surrounding the motor vehicle is limited by the audio-visual ranges of the external sensors.

In block 122, incoming communications containing information on additional objects within and/or beyond the audio-visual range of the external sensors are communicated to the motor vehicle via vehicle-to-everything (V2X) communication to supplement the objects detected in block 120. V2X communication is the passing of information from a vehicle to any communication device and vice versa, including, but not limited to, vehicle-to-vehicle (V2V), vehicle-to-infrastructure (V2I), vehicle-to-pedestrian (V2P), vehicle-to-device (V2D), and vehicle-to-grid (V2G) communications. In block 124, the information gathered by the external sensors from block 116 and information communicated to the motor vehicle from block 122 are fused to increase the confidence factors of the objects detected together with the range and direction of the objects relative to the motor vehicle.

In blocks 126 and 128, once the various information are fused, the detected objects are compared with reference objects in a database to identify the classification of the objects. The types of classification include, but are not limited to, types of lane markings, traffic signs, infrastructure, vehicles, pedestrians, animals, and any other animate or inanimate objects that may be found in a typical roadway. Once the objects are classified, the movements of the objects are tracked and predicted based on historic locations and trends in movement of the objects.

The perception process 110 is partially controlled by a scene detection schema (SDS) at block 130. The SDS describes what objects in block 120 and classifications in block 126 to search for at a particular point in time. In block 142, a perception priority manager has the responsibility to control and manage which tasks to perform in the perception pre-processing of block 118. For example, the perception priority manager may allocate greater processing power to the sensors directed rearward of the vehicle as the vehicle is moving rearward into a parking space.

The PSG 112 is generated containing information on a set of localized objects, categories of each object, and relationship between each object and the motor vehicle. The PSG 112 is continuously updated by the information gathered by the external sensors in block 116 and communications received by V2X communications in block 122 to reflect the real time change of the adjacent and non-adjacent volume of space and areas surrounding the motor vehicle. The historical events of the PSG 112 may be recorded in the perception controller's memory to be retrieved at a later time.

In block 114, the vehicle SDL, which may be part of the motor vehicle ADAS, subscribes to the PSG 112 to extract information pertaining to the external surrounding volume of space and areas of the motor vehicle. The vehicle SDL 114 can process the information contained in the PSG 112 to render and display on a human machine interface (HMI) 132, such as a display monitor on the dash of the motor vehicle, a virtual three-dimensional landscape representing the real-world environment surrounding the motor vehicle.

The vehicle SDL 114 can also analyze the information extracted from the PSG 112 to manage the current state of the vehicle control system managers 138 and to control the transitions of the control system managers 138 to new states. The vehicle SDL 114 receives information from the vehicle state sensors of block 134 to determine the state of the motor vehicle such as location, velocity, acceleration, yaw, pitch, etc. With information from the PSG 112 and vehicle state sensor information from block 134, the vehicle SDL 114 can execute routines contained in software applications in block 136 to send instructions to the motor vehicle control system manager 138 to operate the vehicle controls 140.

As the vehicle SDL 114 executes routines contained in software applications 136, the software applications 136 may require greater fidelity or information relating to regions of interest, or focus regions 144. This would be similar to the action taken by a vehicle driver of turning their head to see if a vehicle is present before they perform a lane change. A focus region 144 defines an area or volume of space that is important to the software applications of block 136 during a particular time span. The required focus region 144 is communicated to the perception priority manger in block 142, which in turn the priority manager allocates greater processing power to the sensors directed to the required focus region 144 and allocates greater processing power to the sensors directed.

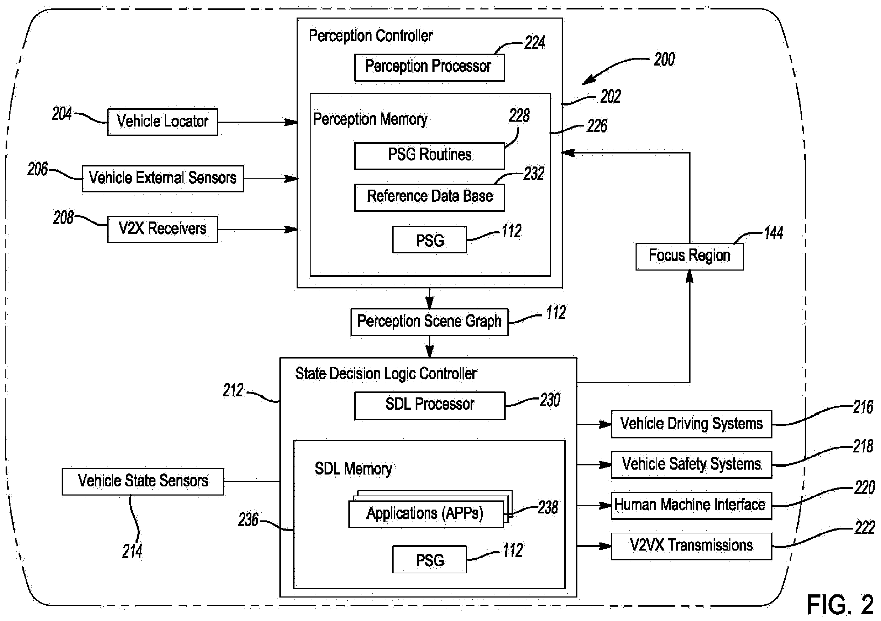

FIG. 2 shows a functional diagram of a perception system 200 having a perception controller 202 configured to receive information from a vehicle locator 204, a plurality of external sensors 206, and V2X receivers 208. FIG. 2 also shows a functional diagram of a SDL controller 212 configured to receive vehicle state information from a plurality of vehicle state sensors 214. The SDL controller 212 is configured to be in communication with the vehicle driving systems 216, vehicle safety systems 218, vehicle HMI 220, and vehicle V2X transmitters 222.

The perception controller 202 includes a perception processor 224 and a perception memory 226. The perception processor 224 processes the information gathered from the vehicle locator 204, external sensors 206, and V2X receivers, and executes PSG routines 228 stored in the perception memory 226 to generate the PSG 112 in real time as the motor vehicle is stationary or traveling along a roadway. A real time copy of the PSG 112 is published in the perception memory 226 for availability to various systems that require information pertaining to the surroundings of the vehicle. The perception memory 226 also includes a reference data base 232 containing reference objects that are used to compare with the detected objects for classifying the detected objects. The reference database 232 includes the geometry and classifications of each of the reference objects.

The external sensors 206 are sensors that can detect physical objects and scenes surrounding the motor vehicle. The external sensors 206 include, but are not limited to, radar, laser, scanning laser, camera, sonar, ultra-sonic devices, LIDAR, and the like. The external sensors 206 may be mounted on the exterior of the vehicle such as a rotating laser scanner mounted on the roof of the vehicle or mounted within the interior of the vehicle such as a front camera mounted behind the windshield. Certain of these external sensors 206 are configured to measure the distance and direction of the detected objects relative to the location and orientation of the motor vehicle. Raw information acquired by these external sensors 206 are processes by the perception controller 202 to determine the classification, size, density, and/or color of the detected objects. The external sensors 206 are configured to continuously update their outputs to the perception controller 202 to reflect the real-time changes in the volume of space and areas surrounding the motor vehicle as information are being collected.

The vehicle SDL controller 212 includes a SDL processor 234 and a SDL memory 236. The SDL controller 212 receives information from the vehicle state sensors 214 and is in communication with various vehicle systems and components such as the driving system 216, safety system 218, HMI 220, and V2X transmitters 222. The SDL processor 230 processes information gathered by the vehicle state sensors 214 and subscribes to the PSG 112 to execute software applications stored in the SDL memory 236 to issue instructions to one or more of the vehicle systems 216, 218, 220, 222. The routines include various vehicle software applications 238, also known as vehicle APPS 238, including routines for the operations of the vehicle driving and safety systems 216, 218. For example, the vehicle SDL controller 212 may be in communication with the vehicle driving system 216 that controls the vehicle's deceleration, acceleration, steering, signaling, navigation, and positioning. The SDL memory 236 may also include software applications to render the information stored in the PSG 112 to be displayed on a HMI device 220 such as a display monitor on the dash of the vehicle. The SDL memory 236 may also include software applications 238 that requires greater fidelity information in area or volume of space, also known as a focus region 144 that is important to the software applications 238 during a particular time span. The required focus region 144 is communicated to the perception controller 202 by the SDL controller 212. The perception controller 202 allocates greater processing power to process information collected by the external sensors 206 directed to the required focus region 144.

The perception and SDL processors 224, 230 may be any conventional processor, such as commercially available CPUs, a dedicated ASIC, or other hardware-based processor. The perception and SDL memories 226, 236 may be any computing device readable medium such as hard-drives, solid state memory, ROM, RAM, DVD or any other medium that is capable of storing information that is accessible to the perception processor. Although only one perception controller 202 and only one SDL controller 212 are shown, it is understood that the vehicle may contain multiple perception controllers 202 and multiple SDL controllers 212.

Each of the perception and SDL controllers 202, 212 may include more than one processor and memory, and the plurality of processors and memories do not necessary have to be housed within the respective controllers 202, 212. Accordingly, references to a perception controller 202, perception processor, and perception memories 226 include references to a collection of such perception controllers 202, perception processors, and perception memories that may or may not operate in parallel. Similarly, references to a SDL controller 212, SDL processor 230, and SDL memories 236 include references to a collection of SDL controllers 212, SDL processors 230, and SDL memories 236 that may or may not operate in parallel.

The information contained in the PSG 112 is normalized to the motor vehicle to abstract out the vehicle locator 204, external sensors 206, and V2X receivers 208 as the sources of the information. In other words, the SDL controller 212 is isolated from the raw information that the perception controller 202 receives from the vehicle locator 204, external sensors 206, and V2X receivers 208. With respect to the external surroundings of the motor vehicle, the SDL controller 212 extracts the processed information stored in the PSG 112 as input to execute software applications 238 for the operation of the motor vehicle. The SDL controller 212 does not see the real-world surroundings of the motor vehicle, but only see the virtual 3D model of the real-word surrounding generated by the perception controller 202. A primary benefit to this is that the external sensors 206 and types of external sensors 206 may be substituted without the need to replace the SDL processors 230 and/or upgrade the software applications contained in the SDL memories 236 to accommodate for the different external sensor types. A real-time copy of the PSG 112 may be published to the SDL controller 212 and to various other system controllers and/or computing devices throughout the motor vehicle. This ensures that if one or more of the perception controllers 202 and/or SDL controller 212 should fail, the various other system controllers and/or computing devices will be able to operate temporary in a "limp-home" mode to navigate the motor vehicle into a safe zone or area.

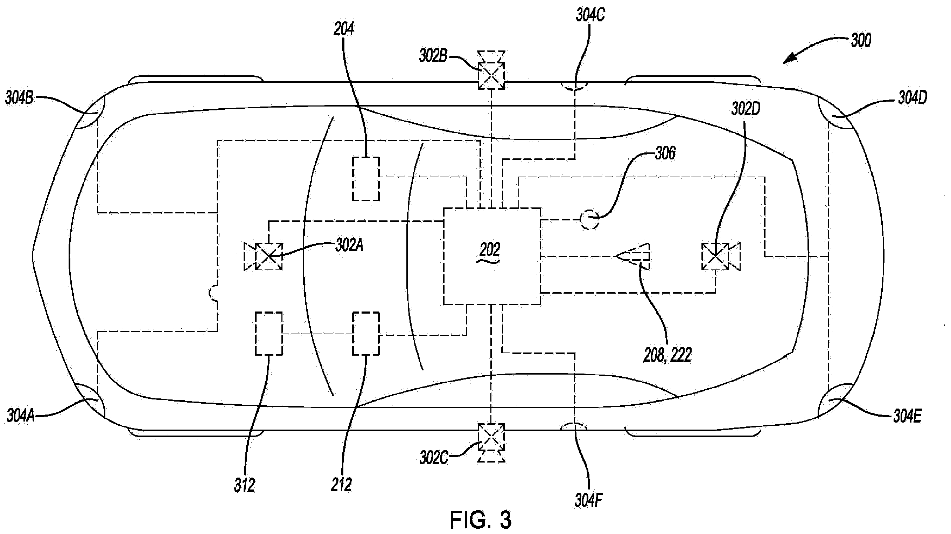

FIG. 3 shows an exemplary land based motor vehicle 300 equipped with the perception system 200 and SDL controller 212 of FIG. 2. For illustrative purposes, a passenger type motor vehicle is shown; however, the vehicle may be that of a truck, sport utility vehicle, van, motor home, or any other type of land based vehicle. It should be appreciated that the motor vehicle may also be that of a water based vehicle such as a motor boat or an air base vehicle such as an airplane without departing from the scope of the present disclosure.

The motor vehicle 300 includes a plurality of cameras 302 configured to capture images of the areas surrounding the motor vehicle 300. The exemplary motor vehicle 300 includes a front camera 302A, a right side camera 302B, a left side camera 302C, and a rear camera 302D. Each of the aforementioned cameras 302A-302D is configured to capture visual information in the visible light spectrum and/or in a non-visual (e.g. infrared) portion of the light spectrum in the field of view, or visual area of coverage, of the respective camera.

The motor vehicle 300 also includes a plurality of ranging sensors 304 distributed about the periphery of the motor vehicle and are configured to detect objects in the immediate vicinity adjacent the motor vehicle. FIG. 3 shows ranging sensors 304A-304F mounted on the periphery of the motor vehicle 300. Each of the ranging sensors 304A-304F may include any ranging technology, including radar, LiDAR, sonar, etc., capable of detecting a distance and direction between an object, such as a pedestrian, and the motor vehicle. The motor vehicle 300 may also include a scanning laser 306 mounted on top of the vehicle configured to scan the volume of space about the vehicle to detect the presence, direction, and distance of objects with that volume of space.

Each of the different types of external sensors 302, 304, 306 have their own unique sensing characteristics and effective ranges. The sensors 302, 304, 306 are placed at locations on the vehicle and collaborate to collect information on areas surrounding the motor vehicle. The sensor information on areas surrounding the motor vehicle may be obtained by a single sensor, such the scanning laser, capable of scanning a volume of space about the motor vehicle or obtained by a combination of a plurality of sensors. The raw data from the sensors 302, 304, 306 are communicated to a pre-processor or directly to the perception controller 202 for processing. The perception controller 202 is in communication with the vehicle SDL controller 212, which is in communications with a various vehicle control systems.

The motor vehicle 300 may include a V2X receiver 208 and V2X transmitter 222. The V2X receiver 208 and V2X transmitter 222 may include a circuit configured to use Wi-Fi and/or Dedicated Short Range Communications (DSRC) protocol for communication other vehicles equipped with V2V communications and to roadside units equipped with V2I communications to receive information such as lane closures, construction-related lane shifts, debris in the roadway, and stalled vehicle. The V2X receiver 208 and transmitters 222 enable the motor vehicle 300 to subscribe to other PSGs generated by other similar equipped vehicles and/or roadside units. The V2X receiver 208 and transmitters 222 also enable the motor vehicle 300 to publish the PSG 112 generated by the perception controller 202. Similarly equipped vehicles within range of the V2X transmitter 222 may subscribe to the published PSG 112. A PSG 112 covering an area greater than the effective ranges of the sensors 302, 304, 306 may be generated by fusing the information from multiple PSGs received from other similar equipped vehicles and/or roadside units capable of generating their own PSGs or transmitting of raw data for the perception controller 202 to process.

The motor vehicle includes a vehicle locator 204, such as a GPS receiver, configured to receive a plurality of GPS signals from GPS satellites to determine the longitude and latitude of the motor vehicle as well as the speed of the motor vehicle and the direction of travel of the motor vehicle. The location, speed, and direction of travel of the motor vehicle may be displayed on a preloaded electronic map and fused with the PSG 112.

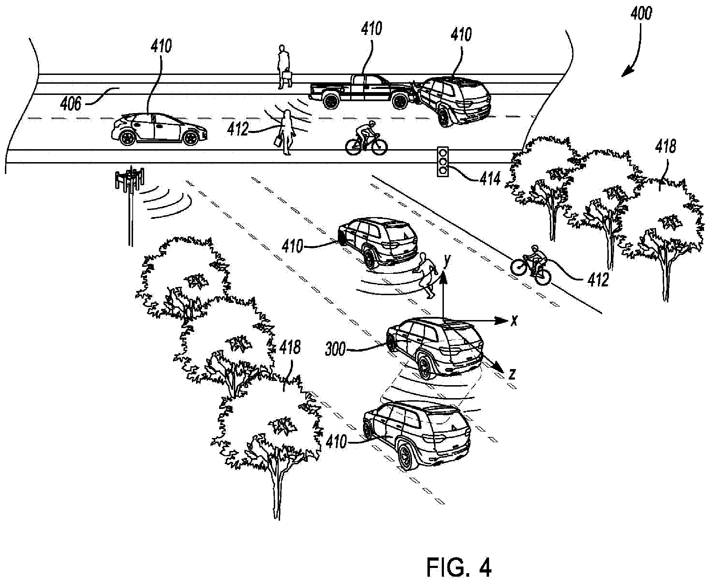

Shown in FIG. 4 is an exemplary illustration 400 of a rendering, also known as image synthesis, of an image of a virtual scene from the information contained in the PSG 112. The illustration 400 is a virtual three-dimensional (3-D) model of the real-world environment surrounding a host motor vehicle 300 including roads 404, intersections 406, and connections 408 between these features. The illustration 400 presents a 3-D view of the objects and surfaces organized about the host motor vehicle 300. The scene also includes manmade objects such as adjacent vehicles 410, pedestrians 412, road signs 414, roadside unit infrastructure such as communication towers 416, and natural objects such as trees 418 and roadside shrubbery 418 arranged in a spatial layout in the x, y, and z directions with respect to the host motor vehicle 300. The rendered objects may include additional details such as texture, lighting, shading, and color. The illustration 400 of the virtual scene is continuously updated in real time as new information is published to the PSG 112 as the host motor vehicle 300 travels down the roadway.

The virtual scene may contain detailed characteristics of the detected objects. For example, the detailed characteristics may include whether an adjacent vehicle 410 is facing toward or away from the host motor vehicle 300, the make and model of the adjacent vehicle 410, and the license plate number of the adjacent vehicle 410. The information to determine these detailed characteristics are collected and processed during the normal operation of the motor vehicle 300. The information is processed by a scene detection schema to determine the detailed characteristics.

The virtual 3-D model of the real-world environment surroundings contain detailed information beyond what can be gathered by the limited ranges of the motor vehicle external sensors 206. The information provided by the motor vehicle external sensors 206 is augmented by additional information supplied to the host motor vehicle 300 by similarly equipped adjacent vehicles 410 and infrastructure roadside units 416 via V2X communications.

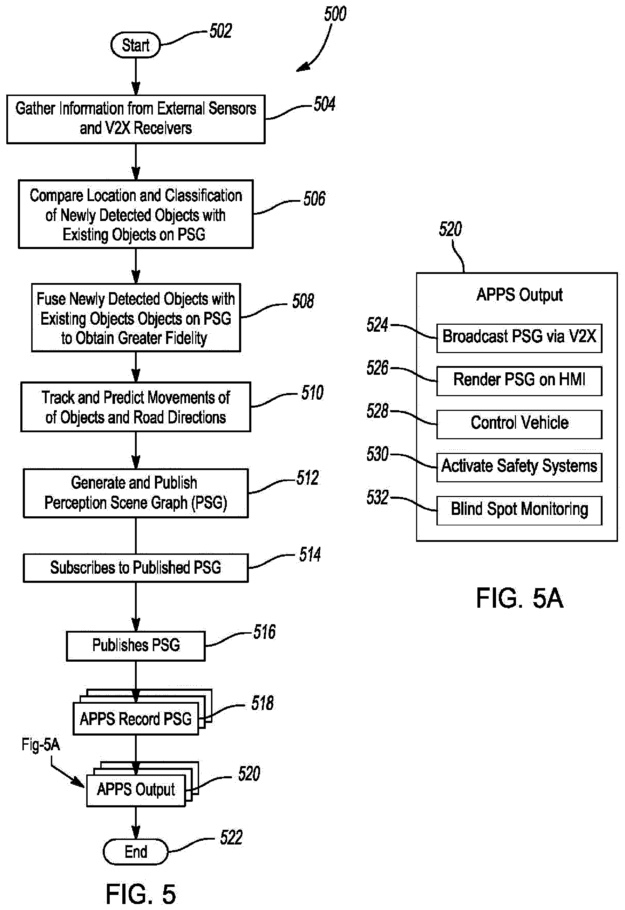

FIG. 5 shows a flowchart of a method 500 for generating a PSG 112 during normal vehicle operation, in accordance with an embodiment. The method starts in step 502 when the motor vehicle 300 is in its operating environment such as traveling down a roadway. In step 504, the external sensors 206 gather information regarding the surrounding of the motor vehicle and communicate the information to the perception controller 202. Additional information regarding the surroundings of the motor vehicle 300, including information that is outside the range of the external sensors 206, are communicated to the perception controller 202 by the V2X receivers 208.

In step 506, the information on objects gathered by the external sensors 206 and information received by the V2X receivers 208 are isolated, detected, and compared with reference objects in a database 232 to identify the classification of the objects. In this step 506, information gathered by the external sensors 206 and information received by the V2X receivers 208 may be fused to increase the confidence factors of the objects detected together with the range and direction of the objects relative to the motor vehicle 300. The newly detected objects are compared with existing objects in the PSG 112 that were previously detected.

In step 508, if the newly detected objects and previously detected objects are determined to be the same, then the newly detected objects are fused with the previously detected objects to obtain greater fidelity of the object. Greater fidelity includes increased details on the object's classification and location with respect to the motor vehicle.

In step 510, once the newly detected objects and previously detected objects are fused, the movements of the objects are tracked and predicted based on historic locations and trends in movement of the objects.

In step 512, the PSG 112 is generated, published, and becomes accessible by various vehicle systems that require information about the surroundings of the motor vehicle. The PSG 112 contains information on a set of localized objects, categories of each object, and relationship between each object and the motor vehicle 300. The PSG 112 is continuously updated and historical events of the PSG 112 may be recorded.

In step 514, a SDL controller 212 subscribes to the published PSG 112. In step 516, the SDL controller 212 publishes a real-time copy of the PSG 112 that may be subscribed to by various other vehicle systems. The various vehicle systems may utilize the published PSG 112 stored in the SDL controller 212 to operate in a temporary "limp-home" mode if the external sensors 206 or perception controller 202 malfunctions.

In step 518, the SDL controller 212 extracts the information stored in the PSG 112 as input to execute software applications 238 for the operation of the various motor vehicle systems. In step 520, the output of the software applications 238 are instructions communicated to the various vehicle systems.

FIG. 5A shows examples of various software applications that may utilize the information stored in the PSG 112 extracted by the SDL controller 212. The various software applications include APPS for communicating by V2X to other vehicles or roadside units 524, rendering a 3-D PSG on a HMI 526, controlling the vehicle drive systems 528, activating systems 530, and blind spot monitoring 532, amongst many other APPS.

The disclosure has described certain preferred embodiments and modifications thereto. Further modifications and alterations may occur to others upon reading and understanding the specification. Therefore, it is intended that the disclosure not be limited to the particular embodiment(s) disclosed as the best mode contemplated for carrying out this disclosure, but that the disclosure will include all embodiments falling within the scope of the appended claims.

## Claims

1. A method of generating a perception scene graph (PSG) (112) for use in a motor vehicle, comprising the steps of:
- collecting sensor information, by at least one external sensor having an effective sensor range, about an adjacent surrounding of the motor vehicle;
- processing the sensor information, by a perception controller (202), to generate the PSG (112) comprising a virtual model of the adjacent surrounding of the motor vehicle;
- subscribing, by a state decision logic (SDL) controller (212), to the PSG (112); and
- extracting information from the PSG (112), by the SDL controller (212), for use in execution of a vehicle application routine.

2. The method of generating a perception scene graph (PSG) (112) of claim 1, further comprising the step of publishing a copy of the PSG (112) to the SDL controller (212).

3. The method of generating a perception scene graph (PSG) (112) of claim 1,
- collecting vehicle-to-everything (V2X) information, by a V2X receiver, about an extended surrounding of the motor vehicle beyond the effective sensor range of the at least one external sensor; and
- processing the V2X information, by the perception controller (202), to generate the PSG (112) comprising a virtual model of the adjacent and the extended surrounding of the motor vehicle,
wherein the V2X information is preferably provided from a plurality of vehicle-to-vehicle (V2V) communication equipped motor vehicles or from a plurality of vehicle-to-infrastructure (V2I) communication equipped road side units.

4. The method of generating a perception scene graph (PSG) (112) of claim 3, further comprising the step of fusing, by the perception controller (202), the sensor information and the V2X information.

5. The method of generating a perception scene graph (PSG) (112) of any of the preceding claims, further comprising the steps of:
- detecting at least one object within the adjacent surrounding of the motor vehicle, by a sensor pre-processor, in the sensor information; and
- comparing the detected at least one object, by the perception controller (202), with a plurality of reference objects to classify the detected at least one object; and preferably
- determining the range and direction of the detected at least one object with respect to the motor vehicle.

6. The method of generating a perception scene graph (PSG) (112) of any one of the claims 3 to 5, further comprising the steps of continuously updating the PSG (112) by continuous collecting sensor information and receiving V2X information to generate the PSG (112) comprising a real-time virtual 3-dimensional model of the adjacent and extended surroundings of the motor vehicle, wherein the vehicle application routine preferably includes rendering a display of the virtual 3-dimensional model of the adjacent and extended surroundings of the motor vehicle on a human machine interface (HMI).

7. The method of generating a perception scene graph (PSG) (112) of claim 6, further comprising the steps of:
- receiving vehicle state information, by SDL controller (212), on the state of the vehicle including at least one of a vehicle states comprising velocity, acceleration, and steering angle;
- executing a driver assist application routine, by the SDL controller (212), utilizing information extracted from the PSG (112) and the vehicle state information to generate a vehicle control instruction; and
- sending the control instruction by the SDL controller (212), to a vehicle control system to navigate the motor vehicle through the adjacent and extended surrounds of the motor vehicle.

8. The method of generating a perception scene graph (PSG) (112) of claims 6 or 7, further comprising the steps of transmitting, by a V2X transmitter, the PSG (112) comprising the virtual 3-dimensional model of the adjacent and extended surroundings of the motor vehicle to an adjacent vehicle or roadside unit equipped with a V2X receiver.

9. A method of generating a perception scene graph (PSG) (112), comprising the steps of:
- collecting sensor information, by a plurality of external sensors, on a volume of space surrounding a motor vehicle;
- receiving vehicle-to-everything (V2X) information, by a V2X receiver, augmenting the sensor information on the volume of space surrounding the motor vehicle;
- fusing the sensor information and V2X information, by a perception controller (202), to increase the fidelity of the volume of space surrounding the motor vehicle;
- analyzing the fused information, by the perception controller (202), to detect, classify, and locate objects present in the volume of space surrounding the motor vehicle; and
- generating the PSG (112) comprising a virtual 3-dimensional (3-D) model of the volume of space surrounding the motor vehicle containing the classified and located objects.

10. The method of generating a perception scene graph (PSG) (112) of claim 9, further comprising the step of publishing, by the perception controller (202), the PSG (112) containing the virtual 3-D model of the volume of space containing the classified and located objects.

11. The method of generating a perception scene graph (PSG) (112) of claim 10, further comprising the steps of:
- subscribing, by at least one vehicle system controllers, to the PSG (112) published in the perception controller (202); and
- publishing, by the at least one vehicle system controllers, a copy of the PSG (112).

12. A system for generating and using a perception scene graph (PSG) (112) in a motor vehicle, comprising a:
- at least one external sensor having an effective sensor range configured to gather information on a surrounding of the motor vehicle;
- at least one perception controller (202) in communication with the at least one external sensor, wherein the at least one perception controller (202) is configured to generate the PSG (112) comprising a virtual model of the surroundings of the motor vehicle based on the gathered information from the external sensor; and
- at least one state decision logic (SDL) controller (212) in communication with at least one vehicle control system, where the SDL controller (212) is configured to extract information from the PSG (112) to execute a vehicle application for the vehicle control system.

13. The system for generating and using a perception scene graph (PSG) (112) of claim 12, further comprising a pre-processor in communication with the at least one external sensor, wherein the pre-processor is configured to isolate and detect objects in the gathered sensor information.

14. The system for generating and using a perception scene graph (PSG) (112) of claim 13, further comprising a V2X receiver in communication with the perception controller (202), where the V2X receiver is configured to receive V2X information about an extended surrounding of the motor vehicle beyond the effective sensor range of the at least one external sensor and wherein the perception controller (202) preferably comprises a perception processor (224) and a perception memory (226), wherein the perception memory (226) includes at least one routine assessable by the perception processor (224) to generate the PSG (112) based on information gathered by the external sensor and V2X communication.

15. The system for generating and using a perception scene graph (PSG) (112) of claim 14, further comprising at least one state decision logic (SDL) controller (212) having a SDL processor (230) and a SDL memory (236), wherein the SDL memory (236) includes an application routine to extract information from the PSG (112), and wherein the SDL controller (212) is preferably configured to publish a copy of the PSG (112).
